# EUROPÄISCHE PATENTSCHRIFT

(11) **EP 3 267 700 B1**
(45) Veröffentlichungstag und Bekanntmachung des Hinweises auf die Patenterteilung: **15.05.2019**
(21) Anmeldenummer: 17175397.3
(22) Anmeldetag: 12.06.2017
(51) Int. Cl.: H04W 4/00, G06F 3/01

(54) **VERFAHREN ZUM AUSTAUSCH UND ANZEIGEN VON STANDORTBEZOGENEN INFORMATIONEN**
METHOD FOR EXCHANGING AND DISPLAYING OF LOCATION-BASED INFORMATION
PROCÉDÉ D'ÉCHANGE ET D'AFFICHAGE D'INFORMATIONS ASSOCIÉES À UN EMPLACEMENT

(30) Priorität: 05.07.2016 DE 102016212185
(43) Veröffentlichungstag der Anmeldung: 10.01.2018
(73) Patentinhaber: VOLKSWAGEN AKTIENGESELLSCHAFT, 38440 Wolfsburg (DE)
(72) Erfinder: Kleen, Andro, 38100 Braunschweig (DE); Krahnstöver, Anna Zoe, 85049 Ingolstadt (DE); Semmler, Carsten, 38162 Cremlingen (DE); Haar, Adrian, 38448 Wolfsburg (DE)

(56) Entgegenhaltungen:
- DE-A1-102013 217 266
- DE-A1-102014 214 514

## Beschreibung

Die Erfindung betrifft ein Verfahren zum Austausch und Anzeigen von standortbezogenen Informationen mehrerer Kommunikationsteilnehmer, insbesondere mindestens eines Kommunikationsteilnehmers in einem Fahrzeug, ein System eingerichtet zur Durchführung des Verfahrens, ein Fahrzeug mit einer Vorrichtung eingerichtet zur Durchführung des Verfahrens sowie ein Computer-Programmprodukt mit Programmcode zur Durchführung des Verfahrens.

Im zunehmenden Maße werden Fahrzeuge mit so genannten FPK-basierten Anzeigen und Bedieneinrichtungen beziehungsweise FPK-Instrumenten (frei programmierbares Kombiinstrument) ausgestattet. Diese erlauben in kostengünstiger Weise praktische Anwendungen, die dem Fahrer hilfreiche Informationen über einen Fahrzeugzustand und Außenbedingungen liefern können. Hierbei ist sehr von Vorteil, dass eine Übersicht an der Fahrzeugarmatur nicht durch eine Vielzahl von Anzeigen verloren geht.

Verabreden sich zwei Personen mit einem Fahrzeug an einem bestimmten Ort, wie ein großer Parkplatz, dann benutzen diese meistens ein Navigationssystem, das zum Beispiel in einem FPK-Instrument integriert sein kann. Das Navigationssystem führt die Personen zum vereinbarten Ziel. Das Navigationssystem gibt zwar dem Fahrer die Zielposition an, dennoch ist es oft schwierig das andere Fahrzeug zu identifizieren, weil das Navigationssystem nicht den exakten Parkplatz kennen kann und eine Vielzahl von geparkten Fahrzeugen die Suche oft erschweren.

Bekannt sind AR-Verfahren, das heißt so genannte "augmented reality"-Verfahren (erweiterte Realität), die einem Smartphonenutzer Informationen über Gebäude am Smartphonedisplay einblenden können, wenn dieser das Smartphone mit seiner Kamera zum Gebäude hin ausrichtet. Unter erweiterter Realität beziehungsweise augmented reality ist im Grunde eine computergestützte Erweiterung der Realitätswahrnehmung zu verstehen. Solche Zusatzinformation sprechen einen menschlichen Sinn an. Meistens wird die visuelle Darstellung von Informationen erweitert, beispielsweise eine Ergänzung von Bildern oder Videos mit computergenerierten Zusatzinformationen oder virtuellen Objekten durch Einblendung oder Überlagerung. Bei Fußball-Übertragungen ist "erweiterte Realität" beispielsweise das Einblenden von Entfernungen bei Freistößen mithilfe eines Kreises oder einer Linie.

Die DE 10 2007 051079 A1 beschreibt ein Verfahren zum Aufbau einer Kommunikationsverbindung zwischen einem ersten Fahrer und einem zweiten Fahrzeug mittels in den Fahrzeugen befindlichen Telematikeinheiten, wobei die Telematikeinheit durch den jeweiligen Fahrer und über eine Mensch-Maschine-Schnittstelle der im ersten Fahrzeug befindlichen Telematikeinheit des zu rufenden Fahrzeuges repräsentierende Registrierungskennzeichen durch den Fahrer des ersten Fahrzeuges in die im ersten Fahrzeug befindliche Telematikeinheit eingegeben wird und die Telematikeinheit des ersten Fahrzeuges mit mindestens einer zweiten Telematikeinheit eines zweiten Fahrzeuges eine Kommunikationsverbindung herstellt, und eine Überprüfung des Registrierungskennzeichnens durch die Telematikeinheit des zweiten Fahrzeuges über die hergestellte Kommunikationsverbindung erfolgt und dem Fahrer des zweiten Fahrzeuges das Registrierungskennzeichen des ersten Fahrzeuges über die Telematikeinheit auf einer mit der Telematikeinheit verbundenen Mensch-Maschine-Schnittstelle im Fahrzeug ausgegeben wird.

Aus der BR 9101645 U2 ist eine Vorrichtung zum Alarmieren eines Fahrers eines Fahrzeuges bekannt. Ein vorausfahrendes Fahrzeug sendet hierbei mittels Bluetooth einem dahinter fahrenden Fahrzeug eine Gefahreninformation, beispielsweise "Reh auf der Strasse".

Die US 2004 0116106 A1 offenbart ein Verfahren zur Kommunikation zwischen mobilen Einheiten und einer Kommunikationsvorrichtung eines Fahrzeuges. Hierbei werden virtuelle Micro-Netzwerke, wie WLAN oder Bluetooth, eingesetzt.

In der US 2006 0155548 A1 ist ein Fahrzeug-Chat-System gezeigt und beschrieben, dass Chatten zwischen Fahrzeuginsassen erlaubt. Dieses basiert auf einer Spracherkennung.

Eine Fahrzeug-Kommunikationslösung geht aus der US 2011 0121991 A1 hervor. Zum Versenden von Bildern und Videoaufnahmen ist ein Kommunikationsgerät mit einer Kamera verbunden.

In der DE 10 2013 217266 A1 wird eine Lösung für ein Anzeigesystem für ein Fahrzeug, insbesondere einen Pkw, vorgeschlagen, das mit einem Head-Up-Display (HUD) ausgestattet ist, welches von einem ersten Kommunikationsgerät entsprechende Positionsdaten empfängt und darstellt. Von einem zweiten Kommunikationsgerät empfängt es ebenfalls dessen Positionsdaten und stellt diese auf dem Head-Up-Display dar. Der Aufbau des Anzeigesystems setzt damit voraus, dass ein entsprechend geeignetes Ausgabegerät, nämlich das Head-Up-Display, zur Darstellung der empfangenen Positionsdaten sowie eine zur Ansteuerung desselben eingerichtete Steuervorrichtung vorhanden sind.

Die DE 10 2014 214514 A1 beschreibt eine Vorrichtung zum Austausch von Daten zwischen Fahrzeugen zum Einrichten einer Kolonnenfahrt. Sie erfüllt damit die Aufgabe, den für eine automatische Kolonnenfahrt zweier Fahrzeuge notwendigen Datenaustausch zur Einhaltung eines konstanten, sicheren Abstands zu gewährleisten.

Der Erfindung liegt nun die Aufgabe zugrunde, eine Lösung zu finden, die das Auffinden von Fahrzeugen oder Personen bei Verabredungen erleichtert.

Diese Aufgabe wird gelöst durch ein Verfahren gemäß Anspruch 1, ein System gemäß Anspruch 12, ein Fahrzeug gemäß Anspruch 13 beziehungsweise ein Computerprogrammprodukt gemäß Anspruch 14.

Das erfindungsgemäße Verfahren ist vorgesehen zum Austausch und zur Anzeige von standortbezogenen Informationen mehrerer Kommunikationsteilnehmer, insbesondere mindestens eines Kommunikationsteilnehmers in einem Fahrzeug, wobei der Informationsaustausch über ein drahtloses Kommunikationsnetzwerk erfolgt, und wobei eine Standortsbestimmung des Teilnehmers erfolgt und eine Teilnehmer-Identifikation des Teilnehmers anhand eines kamerabasierten AR-Verfahrens (Augmented Reality) erfolgt, bei dem mindestens einer der Kommunikationsteilnehmer gekennzeichnet wird. Die Darstellung eines gekennzeichneten Kommunikationsteilnehmers erfolgt dabei in einer Navigationskartendarstellung eines Navigationssystems, wenn sich der zu kennzeichnende Kommunikationsteilnehmer außerhalb eines Kameraerfassungsbereichs befindet.

Das erfindungsgemäße Verfahren hat den Vorteil einer erweiterten Realitätswahrnehmung. Mit diesem Verfahren kann in einfacher und bequemer Weise eine verabredete Person leicht identifiziert werden, beispielsweise durch Kennzeichnung auf einem Display. Die Kennzeichnung ist eine zusätzliche Information zusätzlich zu einer Abbildung des Teilnehmers, beispielsweise eines Fahrzeuges oder einer Person. Die Erfindung kann kostengünstig in einem FPK-Instrument oder Smartphone integriert werden und ist nicht auf Fahrzeuge beschränkt. Die Kennzeichnung muss zudem nicht auf eine visuelle Kennzeichnung beschränkt sein.

Beispielsweise kann ein mehr oder weniger starkes Handyvibrieren oder ein lauter Ton einem Blinden signalisieren, wo sich die gesuchte Person befindet. Richtet die blinde Person die Handykamera auf die gesuchte Person vibriert das Handy stark oder ertönt es laut.

Die vorliegende Erfindung erlaubt außerdem die Schaffung eines FPK-basierten (frei programmierbares Kombiinstrument) Anzeige- und Bedienkonzepts für Funktionen, die Interaktionen mit anderen Verkehrsteilnehmern betreffen. Es lassen sich leicht HMI-Konzepte (human machine interface) realisieren, die darauf ausgerichtet sind die Kommunikation mit anderen Verkehrsteilnehmern zu ermöglichen. Das erfindungsgemäße Verfahren kann sowohl auf eine Kommunikation zwischen verschiedenen Fahrzeugen als auch auf die Kommunikation zwischen Fahrzeugen und Fußgängern angewendet werden.

Die erfindungsgemäße Lösung kann leicht durch eine App oder eine andere App-basierte Digitalisierungslösung umgesetzt werden. Die Erfindung ist im Grunde durch beliebige vernetzte Systeme und beliebige vernetzte HMI-Lösungskonzepte realisierbar. Fußgänger, Fahrradfahrer, Motorradfahrer, Fahrzeuge und andere Verkehrsteilnehmer können unter- und miteinander auf verschiedene Weisen mit diesem erfindungsgemäßen Konzept kommunizieren. Denkbar ist eine Einbindung dieser Verkehrsteilnehmer über Mobilgeräte.

Diese erfindungsgemäße Kommunikation kann ohne weiteres auf der Nutzung eines kartenbasierten Interfaces basieren. Bei der hier beschriebenen Erfindung steht eine kamerabasierte Identifikation und eine Kommunikation zwischen einem Nutzer einer App und mindestens einem weiteren Fahrzeug oder einem anderen Verkehrsteilnehmer im Fokus, ohne dass die Erfindung auf solche Verkehrsteilnehmer und App-Nutzer beschränkt ist.

Die erfindungsgemäße "vernetzende Technologie", kann zum Beispiel mit Hilfe mobiler Daten, W-Lan, Industrie-W-Lan oder Bluetooth umgesetzt werden.

Die Erfindung beruht auf dem Gedanken, dass eine Verabredung zwischen mindestens zwei Verkehrsteilnehmern vorausgesetzt ist, von denen mindestens eine Person ein Fußgänger mit einem Mobilgerät sein kann. Bewegt sich dann die andere Person in einem Fahrzeug, ist diese Person entweder auch mit einem Mobilgerät (und einer App) ausgestattet oder das Fahrzeug verfügt über die Fähigkeit die gleiche Kommunikationstechnologie, beziehungsweise das gleiche Netz, wie das Mobilgerät des Fußgänger zu nutzen.

In vorteilhafter Weise können Situationen gemeistert werden, in denen ein Erkennen des jeweiligen Verabredungs-Partners erschwert ist. Dies kann zum Beispiel dann der Fall sein, wenn ein Fußgänger von einem bestimmten Fahrzeug abgeholt werden soll, dieses sich zwar in der Nähe befindet, aber aufgrund von schlechten Lichtverhältnissen (Dunkelheit, starker Regen, Nebel) oder gänzlicher Sichtverdeckung (Fahrzeug hinter Häusern, Wald etc.) nicht oder gar nicht wahrgenommen werden kann. Ebenso kann das richtige Fahrzeug eventuell aufgrund der Anwesenheit vieler anderer Fahrzeuge nicht zweifelsfrei identifiziert werden. Diese Situation kann, wie bereits angedeutet, zum Beispiel an stark frequentierten Orten wie zentralen Plätzen in einer Stadt, großen Parklätzen (zum Beispiel an Fußballstadien etc.) auftreten. Solche Situationen sind deswegen besonders schwierig, da klassische Navigationssysteme bei der "Nahfeldorientierung" nicht mehr helfen. Obwohl sich beide Partner an der gleichen "Adresse" befinden, ist das Gelände unter Umständen so weitläufig oder schwierig, dass ein unmittelbares Zusammentreffen nicht möglich ist.

Die Erfindung beruht auf der Erkenntnis, dass zur Problemlösung die Kamera des Mobilgerätes oder eine andere Kamera genutzt werden kann. Der wesentliche Erfindungsgedanke ist, dass die Kamera auf den entsprechenden Partner nach dem Vorbild von AR-Verfahren (Augmented Reality, computergestützte Erweiterung der Realität) gerichtet wird. Dieser kann zum Beispiel durch eine Umrandung hervorgehoben werden (Augmented Reality-Anzeige). Da die Positionsdaten und relative Position aufgrund des elektronischen Austausches bekannt sein können, kann so eine eindeutige Identifikation des Fahrzeugs oder des Verkehrsteilnehmers vorgenommen werden, oder das Fahrzeug oder des Verkehrsteilnehmers kann überhaupt erst entdeckt werden. Die Erfindung beruht auf der Grundidee, ein Smartphone mit Kamerabild und mit AR-Verfahren einzusetzen. Der jeweilige Partner wird zum Beispiel durch eine Umrandung hervorgehoben und gekennzeichnet.

Die Umsetzung dieses erfindungsgemäßen Lösungskonzepts ist nicht auf die Existenz eines anderen Fahrzeugs angewiesen, sondern ist ebenso für die Nutzung von zwei Fußgängern beziehungsweise zwei Mobiltelefonen gedacht. Darüber hinaus ist die Erfindung nicht zwangsläufig an die Kommunikation zwischen zwei Personen beschränkt. Das erfindungsgemäße Augmented-Reality-Verfahren kann auch zur Suche des eigenen oder eines anderen geparkten Autos auf einem großen Parkplatz verwendet werden. Hierfür kann eine Option "Standortanforderung" an das eigene Fahrzeug vorgesehen sein, die entweder durch den Nutzer selbst, oder auch automatisiert vorgenommen werden kann. Diese automatisierte Ausführung kann wiederum auf bestimmte Uhrzeiten festgelegt werden (zum Beispiel gegen Ende der Arbeitszeit) oder sich im Sinne von lernenden Systemen an sich verändernden Standortinformationen (Positionen des Nutzers) orientieren.

In einer vorteilhaften Weiterbildung des erfindungsgemäßen Verfahrens ist vorgesehen, dass der Teilnehmer in einem Display eines HMI-Gerätes gekennzeichnet, insbesondere umrandet, wird. Das HMI-Gerät kann so ausgeführt sein, dass ein Bild auf die Frontscheibe des Fahrzeuges abgebildet wird. Dadurch ist der Teilnehmer schnell und einfach erkennbar, wenn die Kamera in seine Richtung gerichtet wird.

Von besonderem Vorteil ist es, wenn zum Austausch und Anzeigen der standortbezogenen Informationen mindestens ein HMI-Gerät (human machine interface) eingesetzt wird, das als FPK-Instrument (frei programmierbares Kombiinstrument), als HUD-Gerät (head up display), als VR-Brille (virtual reality), als Smartphone oder als Tablet-PC ausgeführt ist. Diese Einrichtungen verfügen über eine geeignete Anzeige, um den Teilnehmer zu markieren und somit hervorzuheben.

Bei einer weiteren vorteilhaften Ausführung der Erfindung ist in dem HMI-Gerät, insbesondere durch Eingabe in einem Touchscreen des HMI-Gerätes, eine Funktion "Anrufen", "Text schreiben", eigene Position senden, und/oder "Position hervorheben" vorhanden. Somit können zusätzlich verschiedene Kontaktoptionen angeboten werden, um mit dem Fahrer in Kontakt zu treten. Diese können direkt ausgewählt werden. Die Option "Position hervorheben" bietet die Möglichkeit die Augmented-Reality-Möglichkeiten des Fahrzeugs auszunutzen und die eigene Position zum Beispiel im HUD des Fahrzeugs noch einmal besonders hervorzuheben.

Eine besonders bevorzugte Weiterbildung der Erfindung zeichnet sich dadurch aus, dass das Kommunikationsnetzwerk ein Funknetzwerk, beispielsweise ein Mikro-Netzwerk, wie ein W-LAN-, Industrie-WLAN, insbesondere WLAN nach der V2V-Technolgie, ein Bluetooth-Netzwerk oder ein anderes lokales Netzwerk ist. Diese Netze haben gegenüber dem Mobilfunknetz den Vorteil, dass eine direkte und daher besonders schnelle Kommunikation ohne zusätzliche Kosten, wie Verbindungskosten, möglich ist.

Zwar sind viele Anwendungen des erfindungsgemäßen Verfahrens denkbar, besonders Nützlich ist die Erfindung jedoch im Zusammenhang mit dem vorgenannten Verabredungsproblem. Von Vorteil ist daher, wenn das Verfahren als Verabredungsprogramm oder Verabredungs-App ausgeführt ist. Hierbei wird mindestens einer von mindestens zwei sich zu einem Treffen oder anderem Ereignis verabredeten Kommunikationsteilnehmern gekennzeichnet, beziehungsweise hervorgehoben, insbesondere durch eine Umrandung und dergleichen. Beispielsweise kann eine ganze Gruppe von Personen oder Fahrzeugen gekennzeichnet werden. Es muss also nicht nur ein einziger Teilnehmer gekennzeichnet werden. Dies erhöht die Flexibilität des Verfahrens.

In einer anderen vorteilhaften Weiterbildung des erfindungsgemäßen Verfahrens ist mindestens einer der Kommunikationsteilnehmer ein Fahrzeugteilnehmer. Es kann ein Fahrzeugteilnehmer mit einem anderen Fahrzeugteilnehmer (Fahrzeug mit Fahrer) oder mit einem fahrzeuglosen Verkehrsteilnehmer, wie ein Fußgänger, oder mit einem fahrerlosen Fahrzeug (geparktes Fahrzeug) kommunizieren.

In einer weiteren vorteilhaften Weiterbildung des erfindungsgemäßen Verfahrens ist mindestens einer der Kommunikationsteilnehmer ein Fußgänger. Der Fußgänger kann mit mindestens einem anderen Fahrzeugteilnehmer (Fahrzeug mit Fahrer) oder mit mindestens einem fahrzeuglosen Verkehrsteilnehmer, wie ein anderer Fußgänger, oder mit einem fahrerlosen Fahrzeug (geparktes Fahrzeug) kommunizieren.

In einer weiteren vorteilhaften Weiterbildung des erfindungsgemäßen Verfahrens ist mindestens einer der Kommunikationsteilnehmer ein Fahrzeug. Das Fahrzeug (geparktes Fahrzeug) kann mit mindestens einem anderen Fahrzeugteilnehmer (Fahrzeug mit Fahrer) oder mit mindestens einem fahrzeuglosen Verkehrsteilnehmer, wie ein Fußgänger, kommunizieren.

Zweckmäßigerweise erfolgt mindestens eine Positionsbestimmung eines Kommunikationsteilnehmers durch Satellitenortung, insbesondere GPS, durch Bilderkennung, insbesondere über vordefinierte Bildpunkte, über einen Kompass, insbesondere einem Kompass eines Smartphones oder eines anderen HMI-Gerätes, über externe Signalgeber, insbesondere VLC (video lan), Beacons oder WLAN, durch Lateration (Entfernungsmessung), Angulation (Winkelpeilung), Szenenanalyse (object matching, fingerprinting) und/oder Proximityverfahren (Nachbarschaftsverfahren; Sensoren, acces points, terminals). Eine Positions- beziehungsweise Standortbestimmung ist ein Bestandteil der Erfindung und sollte hinreichend genau sein, um den Teilnehmer zu identifizieren. Die Genauigkeit sollte zwischen 0,1 bis 1 Meter sein. Eine Positionsbestimmung kann intern durch interne Signale in einem Gerät, zum Beispiel einem Smartphone oder durch externe Signale erfolgen.

Grundsätzlich nicht notwendig aber vorteilhaft ist es, wenn eine Verarbeitung zur visuellen Kennzeichnung anhand eines in gespeichertem Kartenmaterial, insbesondere mit Hilfe eines Navigationssystems, erfolgt. In der Navigationskarte sind bereits wichtige Informationen gespeichert, die für eine Auswertung vorteilhaft sind. So kann die Genauigkeit des erfindungsgemäßen Verfahrens verbessert werden, wenn eine Bildinformation der Kamera mit einer Karteninformation (Szenenanalyse) verglichen wird.

Das erfindungsgemäße Fahrzeug umfasst eine Vorrichtung mit mindestens einer Kommunikationsschnittstelle für die drahtlose Kommunikation, mindestens eine Kamera zur Bilderfassung im AR-Verfahren und/oder mindestens eine Positionserfassungseinheit zur Erfassung des Standortes. Es gelten die gleichen Vorteile und Modifikationen wie zuvor beschrieben.

Das erfindungsgemäße Fahrzeug umfasst ein System, eine Vorrichtung beziehungsweise zwei Kommunikationsvorrichtungen wie zuvor beschrieben eingerichtet zur Durchführung des zuvor beschriebenen Verfahrens, wobei mindestens eine Kommunikationsschnittstelle für die drahtlose Kommunikation, mindestens eine Kamera zur Bilderfassung im AR-Verfahren, mindestens eine Navigationskartendarstellung zur Bilddarstellung im AR-Verfahren und/oder mindestens eine Positionserfassungseinheit zur Erfassung des Standortes vorhanden sind. Es gelten die gleichen Vorteile und Modifikationen wie zuvor beschrieben.

Das erfindungsgemäße Computer-Programmprodukt umfasst einen Programmcode zur Durchführung des zuvor beschriebenen Verfahrens, wenn das Programmprodukt auf einer Recheneinheit oder einer Vorrichtung des Fahrzeugs ausgeführt wird. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Systems mit zwei Fahrzeugen;
- Figur 2: eine schematische Darstellung einer Anzeige des erfindungsgemäßen Systems nach Figur 1;
- Figur 3: eine schematische Darstellung eines erfindungsgemäßen Systems mit einem Fahrzeug und einem Fußgänger;
- Figur 4: eine schematische Darstellung einer Anzeige des erfindungsgemäßen Systems nach Figur 3;
- Figur 5: ein Blockdiagramm einer Vorrichtung des Systems nach Figur 1 oder Figur 2; und
- Figur 6: ein Ablaufdiagramm des erfindungsgemäßen Verfahrens;

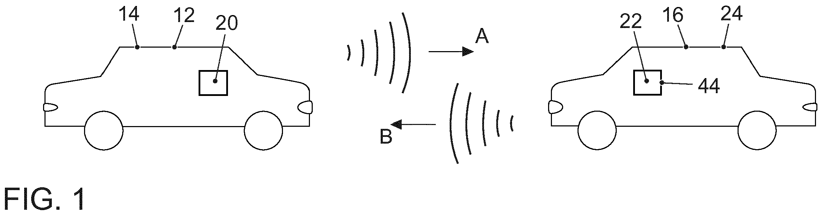

Figur 1 zeigt ein System 10 zur Ausführung eines Verfahrens zum Austausch und Anzeige von standortbezogenen Informationen mehrerer Kommunikationsteilnehmer 14, 16, insbesondere mindestens eines Kommunikationsteilnehmers 14, 16 in einem Fahrzeug 12 beziehungsweise 24. Das oder die Fahrzeuge 12 und 24 sind zum Beispiel Personenkraftwagen, Motorräder oder Nutzfahrzeuge.

Das System 10 umfasst mindestens zwei HMI-Geräte 20, 22 (human machine interface). Das erste HMI-Gerät 20 ist einem ersten Fahrzeug 12 zugeordnet und das zweite HMI-Gerät 22 einem zweiten Fahrzeug 24 zugeordnet. Die beiden HMI-Geräte 20 und 22 können fest in dem jeweiligen Fahrzeug 12 beziehungsweise 24 angeordnet sein, zum Beispiel als Bestandteil eines Navigationssystems. Ebenso können die beiden HMI-Geräte 20 und 22 mobil in dem jeweiligen Fahrzeug 12 beziehungsweise 24 angeordnet sein, zum Beispiel als Smartphone.

Zwischen beiden HMI-Gerät 20 und 22 besteht eine bidirektionale Kommunikationsverbindung per WLAN oder einem vergleichbarem Netz, was durch die Pfeile A, B angedeutet ist. Somit ist ein Informationsaustausch über ein drahtloses Kommunikationsnetzwerk möglich. Beide Kommunikationsteilnehmer 14, 16 identifizieren sich über ein Kommunikationsprogramm, das zunächst durch Internetverbindung zum Beispiel über ein Social-Media-Programm eine Kommunikation der Teilnehmer 14, 16 sicherstellt. Das Programm umfasst eine Verabredungs-App, mit der beide Kommunikationsteilnehmer 14, 16 einen Termin und ein Ort verabreden können, beispielsweise ein Treffen auf einem Parkplatz zu einem bestimmten Termin.

Beide HMI-Geräte 20, 22 verfügen über ein Standortsbestimmungssystem, beispielsweise ein GPS-System. Dadurch ist eine Standortbestimmung der Teilnehmer 14, 16 beziehungsweise des Teilnehmers 16 möglich. Der zweite Teilnehmer 16 im Fahrzeug 24 soll nämlich vom ersten Teilnehmer 14 im Fahrzeug 12 erkannt werden.

Erreicht der Teilnehmer den vereinbarten Parkplatz wird automatisch eine Kommunikationsverbindung im WLAN-Netz hergestellt, so dass das zweite HMI-Gerät 22 oder eine hiermit verbundene Einrichtung dem ersten HMI-Gerät 20 seine durch GPS ermittelte Position über dieses Netz mitteilt.

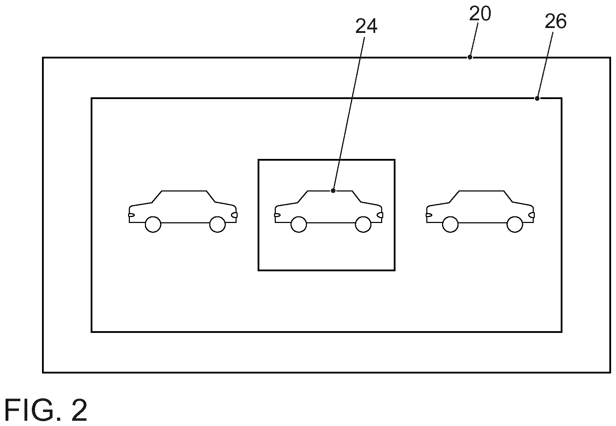

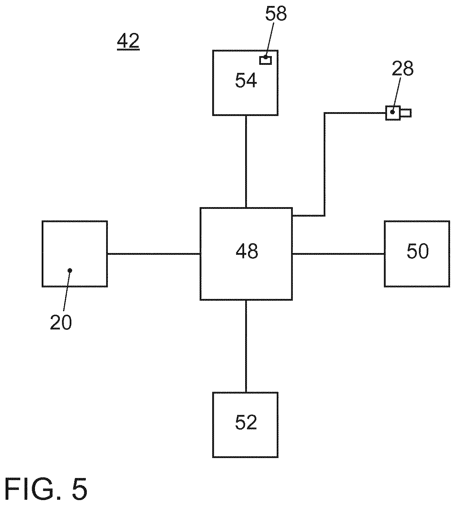

Wie Figur 2 veranschaulicht, weist das erste HMI-Gerät 20 eine Anzeige beziehungsweise Display 26 auf und verfügt über eine Kamera 28, die in Fig. 5 dargestellt ist. Das Display 26 kann auch ein HUD-Gerät (head up display) sein, bei dem eine Darstellung auf die Windschutzscheibe projiziert wird.

Erreicht das zweite Fahrzeug 24 einen Erfassungsbereich der Kamera 28, die in Wirkverbindung mit dem ersten HMI-Gerät 20 steht, wird das zweite Fahrzeug 24 im Display 26 umrandet dargestellt, wie Figur 2 zeigt. Dadurch erfolgt eine Teilnehmer-Identifikation des Teilnehmers anhand eines kamerabasierten AR-Verfahrens (augmented reality), bei dem mindestens einer der Kommunikationsteilnehmer 16 visuell gekennzeichnet wird. Eine Standortbestimmung erfolgt durch eine Standortbestimmungseinheit 58 (Figur 5), beispielsweise durch eine GPS-Einheit.

Das HMI-Gerät 20 (human machine interface) ist beispielsweise als FPK-Instrument (frei programmierbares Kombiinstrument) mit Touchscreen ausgeführt. Das HMI-Gerät 20 kann alternativ auch ein Smartphone oder ein Tablet-PC sein.

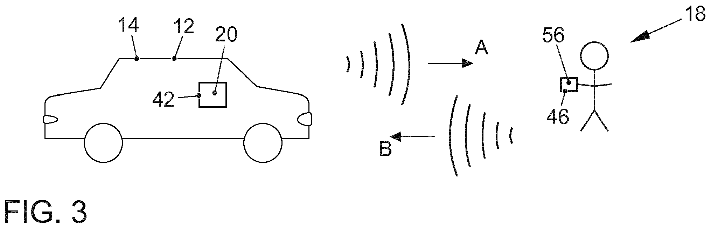

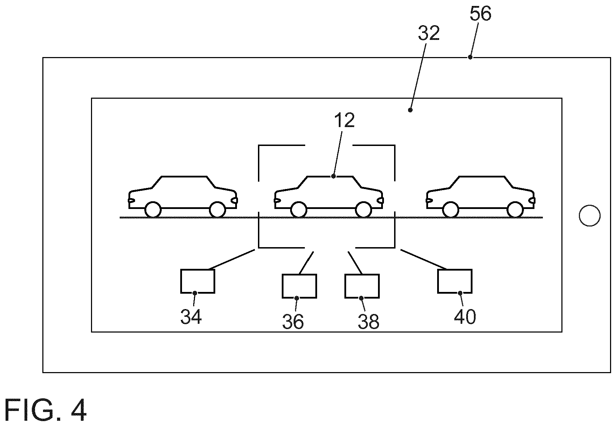

In dem Beispiel gemäß Figur 3 und 4 ist der zweite Teilnehmer ein Fußgänger 30, der zum Identifizieren des ersten Fahrzeuges 12 ein Smartphone 56 mit einem Display 32 mit Touchscreen hat. Nachdem die oben beschriebenen Schritte zum Informationsaustausch und/oder zur Kontaktaufnahme ausgeführt worden sind, wir die Darstellung im Display 32 zum Beispiel wie in Figur 4 dargestellt aussehen. Das Display 32 stellt nach dem AR-Verfahren das Fahrzeug 12 analog zum ersten Beispiel gemäß Figur 1 und Figur 2 umrandet dar.

Das Smartphone 56 verfügt über eine Verabredungs-App, bei der der zu dem Treffen verabredete Kommunikationsteilnehmer 14, der sich in dem ersten Fahrzeug 12 befindet, umrandet und dadurch gekennzeichnet wird.

Im Display 32 erscheinen optional vier Eingabeoptionen 34 bis 37 beziehungsweise Funktionen und zwar in diesem Beispiel "Anrufen " 34, "Text schreiben" 36, "eigene Position senden" 38, und "Position hervorheben" 40.

Figur 5 zeigt eine Vorrichtung 42 mit Mitteln zur Durchführung des Verfahrens, wobei das in Figur 1 dargestellte System 10 aus mehreren und zwar den Vorrichtungen 44 (Figur 1) und 46 (Figur 3) besteht. Die Vorrichtung 42 kann wie dargestellt in den Vorrichtungen 44 und 46 vorgesehen sein. Hierbei ist jeweils eine Rechen- und Verarbeitungseinheit 48 vorhanden, die mit einer Kamera 28, einer WLAN-Schnittstelle 50, einem Mobilfunk-Teil 52, einem HMI-Gerät 20 und einem Navigationssystem 54 verbunden ist.

Das Navigationssystem 54 umfasst eine Standortbestimmungseinheit 58, um die Position des Teilnehmers der Vorrichtung 42 zu bestimmen und diese einem anderen Teilnehmer mitzuteilen. Mit der Kamera 28 wird ein reales Bild erzeugt, das den anderen Teilnehmer erfassen kann, um diesen durch das AR-Verfahren hervorzuheben. Das Kamerabild wird im Display des HMI-Gerätes 20 gezeigt. Die Position des zu markierenden Teilnehmers wird durch die WLAN-Schnittstelle 50 empfangen.

Mit der Recheneinheit 48 werden alle relevanten Informationen verarbeitet, um den gesuchten Teilnehmer hervorzuheben. Insbesondere können Informationen über den gesuchten Teilnehmer wie zum Beispiel eine bildliche Darstellung wie ein Foto, eine Typskizze eines Fahrzeugs oder ähnliches mit der Position oder dem Standort des gesuchten Teilnehmers abgeglichen werden, um eine exakte Bestimmung zu ermöglichen.

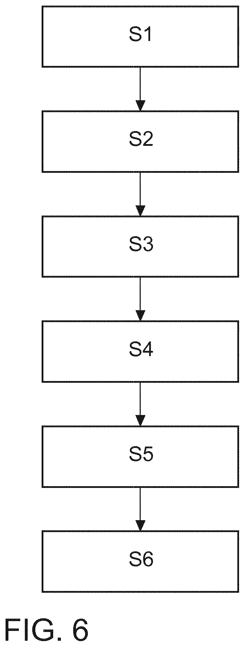

In Figur 6 ist ein Ablaufdiagramm des Verfahrens gezeigt. Das Verfahren kann mit zwei oder mehreren Teilnehmern durchgeführt werden.

Im Schritt S1 sendet ein erster Teilnehmer eine Anfrage an einem zweiten Teilnehmer, um sich zu verabreden. Dies erfolgt zum Beispiel über eine Internetverbindung anhand einer App oder über eine direkte Kommunikation wie zum Beispiel Bluetooth oder eine Nahfeldkommunikation.

Im Schritt S2 bestätigt der zweite Teilnehmer den Verabredungstermin und den Verabredungsort, der vom ersten Teilnehmer vorgeschlagen worden ist. Der Verabredungstermin kann optional sein, wenn die Verabredung direkt stattfinden soll. Auch ist es möglich, dass sich beide Teilnehmer bereits an dem Verabredungsort befinden, sich aber noch nicht erkannt oder gefunden haben.

Im Schritt S3 wird die Kamera kurz vor dem Termin entweder automatisch oder manuell aktiviert. Die Aktivierung kann zeitgesteuert oder ortsgesteuert sein. Ebenso ist es möglich, dass der Teilnehmer seine Kamera manuell aktiviert.

Im Schritt S4 wird die Position des zweiten Teilnehmers entweder manuell oder automatisch gesendet. Das Übersenden der Position kann über die gleiche Kommunikationsverbindung erfolgen, die bereits für die Anfrage zur Verabredung genutzt wurde. Alternativ kann eine andere Verbindung genutzt werden. Zum Beispiel kann eine erste Kommunikationsverbindung wie eine Mobilfunkverbindung, welche eine Datenübertragung über große Entfernungen erlaubt, für die Anfrage genutzt werden und eine zweite Kommunikationsverbindung wie eine Nahfeldkommunikation, welche eine Datenübertragung nur über kurze Entfernungen erlaubt, für das Übersenden der Position genutzt werden.

Im Schritt S5 wird das Positionssignal des zweiten Teilnehmers am Gerät des ersten Teilnehmers verarbeitet.

Im Schritt S6 wird der zweite Teilnehmer im Display des Gerätes des ersten Teilnehmers umrandet, so dass der zweite Teilnehmer identifiziert werden kann.

Analog kann eine Umrandung des ersten Teilnehmers am Gerät des zweiten Teilnehmers erfolgen.

Die Erfindung ist nicht auf die beschriebenen Ausführungsformen beschränkt, so kann das HMI-Gerät auch als VR-Brille (virtual reality), oder Tablet-PC ausgeführt sein. Das Kommunikationsnetzwerk kann ein Industrie-WLAN, insbesondere WLAN nach der V2V-Technolgie, ein Bluetooth-Netzwerk oder ein anderes lokales Netzwerk sein. Auch muss der Teilnehmer keine Person sein. Dieser kann ein (geparktes) Fahrzeug sein. Die Positionsbestimmung des Kommunikationsteilnehmers kann durch Bilderkennung, insbesondere über vordefinierte Bildpunkte, über einen Kompass, insbesondere einem Kompass eines Smartphones oder eines anderen HMI-Gerätes, über externe Signalgeber, insbesondere VLC (video lan) oder Beacons erfolgen oder durch Lateration, Angulation, Szenenanalyse oder einem Proximityverfahren erfolgen. Möglich ist auch eine Verarbeitung anhand eines gespeicherten Kartenmaterials, insbesondere mit Hilfe eines Navigationssystems. Als Fahrzeuge werden weiterhin Landfahrzeuge, wie zum Beispiel LKWs, Busse, Motorräder, Schienenfahrzeuge sowie Luft- und Wasserfahrzeuge angesehen. Ein AR-Verfahren in Sinne der Erfindung ist nicht auf eine visuelle Kennzeichnung beschränkt.

Die Erfindung stellt ein Verfahren dar zum Austausch und zur Anzeige von standortbezogenen Informationen mehrerer Kommunikationsteilnehmer 14, 16, 18, insbesondere mindestens eines Kommunikationsteilnehmers 14, 18 in einem Fahrzeug 12, 24, wobei der Informationsaustausch über ein drahtloses Kommunikationsnetzwerk erfolgt, und wobei eine Standortsbestimmung des Teilnehmers 14, 16, 18 erfolgt und eine Teilnehmer-Identifikation des Teilnehmers 14, 16, 18 anhand eines kamerabasierten AR-Verfahrens erfolgt, bei dem mindestens einer der Kommunikationsteilnehmer 14, 16, 18 gekennzeichnet wird.

### Bezugszeichenliste

- 10: System
- 12: erstes Fahrzeug
- 14: erster Kommunikationsteilnehmer
- 16: zweiter Kommunikationsteilnehmer
- 18: dritter Kommunikationsteilnehmer
- 20: erstes HMI-Gerät
- 22: zweites HMI-Gerät
- 24: zweites Fahrzeug
- 26: Display
- 28: Kamera
- 30: Fußgänger
- 32: Display
- 34: Funktion "Anrufen "
- 36: Funktion "Text schreiben"
- 38: Funktion "eigene Position senden"
- 40: Funktion "Position hervorheben"
- 42: erste Vorrichtung
- 44: zweite Vorrichtung
- 46: dritte Vorrichtung
- 48: Rechen- und Verarbeitungseinheit
- 50: WLAN-Schnittstelle
- 52: Mobilfunk-Teil
- 54: Navigationssystem
- 56: Smartphone
- 58: Standortbestimmungseinheit

## Patentansprüche

1. Verfahren zum Austausch und zur Anzeige von standortbezogenen Informationen mehrerer Kommunikationsteilnehmer (14, 16, 18), wobei der Informationsaustausch über ein drahtloses Kommunikationsnetzwerk erfolgt und eine Standortsbestimmung des Teilnehmers (14, 16, 18) erfolgt und eine Teilnehmer-Identifikation des Teilnehmers (14, 16, 18) anhand eines kamerabasierten Augmented Reality-Verfahrens erfolgt, bei dem mindestens einer der Kommunikationsteilnehmer (14, 16, 18) gekennzeichnet wird, **dadurch gekennzeichnet, dass** eine Darstellung eines gekennzeichneten Kommunikationsteilnehmers (14, 16, 18) in einer Navigationskartendarstellung eines Navigationssystems (54) erfolgt, wenn sich der zu kennzeichnende Kommunikationsteilnehmer (14, 16, 18) außerhalb eines Kameraerfassungsbereichs befindet.

2. Verfahren nach Anspruch 1, **dadurch gekennzeichnet, dass** das Augmented Reality-Verfahren derart ausgeführt wird, dass der Teilnehmer in einem Display eines HMI-Gerätes (20, 22) gekennzeichnet, insbesondere umrandet, wird.

3. Verfahren nach Anspruch 2, **dadurch gekennzeichnet, dass** zum Austausch und Anzeige der standortbezogenen Informationen mindestens ein HMI-Gerät (20, 22) eingesetzt wird, das als frei programmierbares Kombiinstrument, als head up display, als virtual reality Brille, als Smartphone und/oder als Tablet-PC ausgeführt ist.

4. Verfahren nach Anspruch 2 oder 3, **dadurch gekennzeichnet, dass** in dem HMI-Gerät (20, 22), insbesondere durch Eingabe in einem Touchscreen des HMI-Gerätes (20, 22), eine Funktion "Anrufen" (23), "Text schreiben" (34), "eigene Position senden" (38), und/oder "Position hervorheben" (40) vorhanden ist.

5. Verfahren nach einem der vorhergehenden Ansprüche, **dadurch gekennzeichnet, dass** das Kommunikationsnetzwerk (14, 16, 18) ein Funknetzwerk, insbesondere ein WLAN, Industrie-WLAN, insbesondere WLAN nach der V2V-Technolgie, oder ein Bluetooth-Netzwerk ist.

6. Verfahren nach einem der vorhergehenden Ansprüche, **gekennzeichnet durch** eine Ausführung als Verabredungsprogramm oder Verabredungs-App, bei der mindestens einer von mindestens zwei sich zu einem Treffen oder anderem Ereignis verabredeten Kommunikationsteilnehmern (14, 16, 18) gekennzeichnet wird.

7. Verfahren nach einem der vorhergehenden Ansprüche, **dadurch gekennzeichnet, dass** mindestens einer der Kommunikationsteilnehmer (14, 16) ein Fahrzeugteilnehmer ist.

8. Verfahren nach einem der vorhergehenden Ansprüche, **dadurch gekennzeichnet, dass** mindestens einer der Kommunikationsteilnehmer (18) ein Fußgänger (30) ist.

9. Verfahren nach einem der vorhergehenden Ansprüche, **dadurch gekennzeichnet, dass** mindestens einer der Kommunikationsteilnehmer ein Fahrzeug ist.

10. Verfahren nach einem der vorhergehenden Ansprüche, **dadurch gekennzeichnet, dass** mindestens eine Positionsbestimmung eines Kommunikationsteilnehmers (14, 16, 18) durch Satellitenortung, insbesondere GPS, durch Bilderkennung, insbesondere über vordefinierte Bildpunkte, über einen Kompass, insbesondere einen Kompass eines Smartphones oder eines anderen HMI-Gerätes, über externe Signalgeber, insbesondere VLC (video lan), Beacons oder WLAN, durch Lateration, Angulation, Szenenanalyse und/oder ein Proximityverfahren erfolgt.

11. Verfahren nach einem der vorhergehenden Ansprüche, **dadurch gekennzeichnet, dass** eine Verarbeitung zur visuellen Kennzeichnung anhand eines gespeicherten Kartenmaterials, insbesondere mit Hilfe eines Navigationssystems erfolgt.

12. System eingerichtet zur Durchführung des Verfahrens nach einem der Ansprüche 1 bis 11 und mindestens zwei Kommunikationsvorrichtungen, **dadurch gekennzeichnet, dass** mindesten eine Kommunikationsschnittstelle für die drahtlose Kommunikation, mindestens eine Kamera (28) zur Bilderfassung im Augmented Reality-Verfahren, mindestens eine Navigationskartendarstellung zur Bilddarstellung im Augmented Reality-Verfahren und/oder mindestens eine Positionserfassungseinheit zur Erfassung des Standortes vorhanden sind.

13. Fahrzeug mit einer Vorrichtung eingerichtet zur Durchführung des Verfahrens nach einem der Ansprüche 1 bis 11, **dadurch gekennzeichnet, dass** die Vorrichtung mindestens eine Kommunikationsschnittstelle für die drahtlose Kommunikation, mindestens eine Kamera (28) zur Bilderfassung im AR-Verfahren und/oder mindestens eine Positionserfassungseinheit zur Erfassung des Standortes umfasst.

14. Computer-Programmprodukt mit Programmcode zur Durchführung des Verfahrens nach einem der Ansprüche 1 bis 11, wenn das Programmprodukt auf einer Vorrichtung oder einem Informationssystem ausgeführt wird.

## Claims

1. Method for exchanging and displaying location-related information of multiple communication subscribers (14, 16, 18), wherein the information exchange is effected via a wireless communication network and a location determination for the subscriber (14, 16, 18) is effected and a subscriber identification for the subscriber (14, 16, 18) is effected using a camera-based augmented reality method, in which at least one of the communication subscribers (14, 16, 18) is marked, **characterized in that** a depiction of a marked communication subscriber (14, 16, 18) in a navigation map depiction of a navigation system (54) is effected if the communication subscriber (14, 16, 18) to be marked is outside a camera capture area.

2. Method according to Claim 1, **characterized in that** the augmented reality method is carried out such that the subscriber is marked, in particular outlined, in a display of an HMI device (20, 22).

3. Method according to Claim 2, **characterized in that** the location-related information is exchanged and displayed using at least one HMI device (20, 22) embodied as a user-programmable combination instrument, as a head up display, as a virtual reality goggles, as a smartphone and/or as a tablet PC.

4. Method according to Claim 2 or 3, **characterized in that** there is a "call" (23), "write text" (34), "send own position" (38) and/or "highlight position" (40) function in the HMI device (20, 22), in particular as a result of input in a touchscreen of the HMI device (20, 22).

5. Method according to one of the preceding claims, **characterized in that** the communication network (14, 16, 18) is a radio network, in particular a WLAN, industrial WLAN, in particular WLAN based on V2V technology, or a Bluetooth network.

6. Method according to one of the preceding claims, **characterized by** an embodiment as an appointment program or appointment app, in which at least one of at least two communication subscribers (14, 16, 18) who have agreed to a meeting or other event is marked.

7. Method according to one of the preceding claims, **characterized in that** at least one of the communication subscribers (14, 16) is a vehicle subscriber.

8. Method according to one of the preceding claims, **characterized in that** at least one of the communication subscribers (18) is a pedestrian (30).

9. Method according to one of the preceding claims, **characterized in that** at least one of the communication subscribers is a vehicle.

10. Method according to one of the preceding claims, **characterized in that** at least one position determination for a communication subscriber (14, 16, 18) is effected by satellite positioning, in particular GPS, by image recognition, in particular using predefined image points, using a compass, in particular a compass of a smartphone or of another HMI device, using external signal generators, in particular VLC (video lan), beacons or WLAN, by lateration, angulation, scene analysis and/or a proximity method.

11. Method according to one of the preceding claims, **characterized in that** a processing for visual marking is effected using a stored map material, in particular by means of a navigation system.

12. System configured for performing the method according to one of Claims 1 to 11 and at least two communication apparatuses, **characterized in that** at least one communication interface for the wireless communication, at least one camera (28) for image capture in the augmented reality method, at least one navigation map depiction for image depiction in the augmented reality method and/or at least one position capture unit for capturing the location are present.

13. Vehicle having an apparatus configured for performing the method according to one of Claims 1 to 11, **characterized in that** the apparatus comprises at least one communication interface for the wireless communication, at least one camera (28) for image capture in the AR method and/or at least one position capture unit for capturing the location.

14. Computer program product having program code for performing the method according to one of Claims 1 to 11 when the program product is executed on an apparatus or an information system.

## Revendications

1. Procédé d'échange et d'affichage d'informations de localisation d'une pluralité de correspondants de communication (14, 16, 18), dans lequel l'échange d'informations s'effectue par l'intermédiaire d'un réseau de communication sans fil et une détermination de localisation du correspondant (14, 16, 18) est effectuée et une identification du correspondant (14, 16, 18) est effectuée au moyen d'un procédé de réalité augmentée à base de caméra, dans lequel au moins l'un des correspondants de communication (14, 16, 18) est identifié,
**caractérisé en ce qu'**une représentation d'un correspondant de communication (14, 16, 18) identifié est effectuée dans une représentation de carte de navigation d'un système de navigation (54) lorsque le correspondant de communication (14, 16, 18) à identifier se trouve en dehors d'une zone de détection par caméra.

2. Procédé selon la revendication 1, **caractérisé en ce que** le procédé de réalité augmentée est mis en oeuvre de manière à ce que le correspondant soit identifié, en particulier entouré, sur un affichage d'un appareil IHM (20, 22).

3. Procédé selon la revendication 2, **caractérisé en ce qu'**au moins un appareil IHM (20, 22) est utilisé pour échanger et afficher les informations de localisation, celui-ci étant réalisé sous la forme d'un instrument combiné librement programmable, d'un affichage tête haute, de lunettes de réalité virtuelle, d'un téléphone intelligent ou d'une tablette PC.

4. Procédé selon la revendication 2 ou 3, **caractérisé en ce qu'**une fonction "Appeler" (23), "Écrire du texte" (34), "Envoyer sa propre position" (38) et/ou "Position mise en surbrillance" (40) est présente dans l'appareil IHM (20, 22), notamment par saisie sur un écran tactile de l'appareil IHM (20, 22).

5. Procédé selon l'une des revendications précédentes, **caractérisé en ce que** le réseau de communication (14, 16, 18) est un réseau radio, en particulier un WLAN, un WLAN industriel, en particulier un WLAN à technologie V2V, ou un réseau Bluetooth.

6. Procédé selon l'une des revendications précédentes, **caractérisé par** une mise en oeuvre sous la forme d'un programme de rendez-vous ou d'une application de rendez-vous, dans lequel au moins l'un desdits au moins deux correspondants de communication (14, 16, 18) est identifié pour un rendez-vous ou un autre événement.

7. Procédé selon l'une des revendications précédentes, **caractérisé en ce qu'**au moins l'un des correspondants de communication (14, 16) est un correspondant de véhicule.

8. Procédé selon l'une des revendications précédentes, **caractérisé en ce qu'**au moins l'un des correspondants de communication (18) est un piéton (30).

9. Procédé selon l'une des revendications précédentes, **caractérisé en ce qu'**au moins l'un des correspondants de communication est un véhicule.

10. Procédé selon l'une des revendications précédentes, **caractérisé en ce qu'**au moins une détermination de position d'un correspondant de communication (14, 16, 18) est effectuée par positionnement par satellite, notamment GPS, par reconnaissance d'image, notamment au moyen de pixels prédéfinis, au moyen d'une boussole, notamment d'une boussole de téléphone intelligent ou d'un autre appareil HMI, au moyen d'émetteurs externes, notamment VLC (vidéo lan), de balises ou d'un WLAN, par trilatération, triangulation, analyse de scènes et/ou par un procédé de proximité.

11. Procédé selon l'une des revendications précédentes, **caractérisé en ce qu'**un traitement destiné à l'identification visuelle est effectué au moyen d'un support cartographique mémorisé, en particulier à l'aide d'un système de navigation.

12. Système conçu pour mettre en oeuvre le procédé selon l'une des revendications 1 à 11 et au moins deux dispositifs de communication, **caractérisé en ce qu'**au moins une interface de communication pour la communication sans fil, au moins une caméra (28) pour l'acquisition d'images par un procédé de réalité augmentée, au moins une représentation de carte de navigation pour la représentation d'images par le procédé de réalité augmentée et/ou au moins une unité de détection de position pour la détection de la localisation sont présents.

13. Véhicule équipé d'un dispositif conçu pour mettre en oeuvre le procédé selon l'une des revendications 1 à 11,
**caractérisé en ce que** le dispositif comprend au moins une interface de communication pour une communication sans fil, au moins une caméra (28) pour l'acquisition d'images par un procédé AR et/ou au moins une unité de détection de position pour la détection de la localisation.

14. Produit de programme d'ordinateur comportant un code de programme permettant la mise en oeuvre du procédé selon l'une des revendications 1 à 11 lorsque le produit de programme est exécuté sur un dispositif ou un système informatique.
